# EUROPÄISCHE PATENTANMELDUNG

(11) **EP 3 637 356 A1**
(43) Veröffentlichungstag der Anmeldung: **15.04.2020**
(21) Anmeldenummer: 19195523.6
(22) Anmeldetag: 05.09.2019
(51) Int. Cl.: G06Q 50/06

(54) **SYSTEM, LADESTATION UND MOBILGERÄT SOWIE EIN VERFAHREN ZUM ZUORDNEN EINER LADESTATION ZU EINEM MOBILGERÄT**

(30) Priorität: 12.10.2018 DE 102018125274
(71) Anmelder: Innogy SE, 45128 Essen (DE)
(72) Erfinder: Nobis, Dr.-Ing. Philipp, 44269 Dortmund (DE)
(74) Vertreter: Cohausz & Florack

(57) **Zusammenfassung**

Verfahren zum Zuordnen einer Ladestation 2 zu einem Mobilgerät 4 umfassend, Erfassen einer Ladeanforderung für eine Ladestation 2, Erfassen eines Ladewunsches eines Mobilgerätes 4, Zuordnen der Ladestation 2, für die die Ladeanforderung erfasst wurde, zu dem Mobilgerätes 4 für das der Ladewunsch erfasst unter Verwendung zumindest einer Positionsinformation 18b der Ladestation 2 und einer Positionsinformation 14b des Mobilgerätes 4.

## Beschreibung

Der Gegenstand betrifft ein Verfahren zum Zuordnen einer Ladestation zu einem Mobilgerät, insbesondere für die Freigabe und den Betrieb der Ladestation. Darüber hinaus betrifft der Gegenstand ein System, ein Mobilgerät, eine Ladestation sowie ein Server zum Durchführen des gegenständlichen Verfahrens.

Die zunehmende Verbreitung von Ladestationen und die zunehmende Verfügbarkeit dieser führt dazu, dass die Nutzung der Ladestationen auch stark davon abhängig ist, wie deren Benutzerführung ist. Sind mehrere Ladestationen in einem engen räumlichen Umfeld verfügbar, wird ein Nutzer mit hoher Wahrscheinlichkeit diejenige Ladestation nutzen, deren Inbetriebnahme den größten Komfort bietet und den Nutzer vor die geringsten Probleme stellt.

Ein Problem beim Betrieb von Ladestationen liegt im Freigabeprozess des Ladevorgangs. Der Nutzer muss einen Ladevorgang in der Regel manuell freigeben, eher dieser stattfindet. Bei Ladestationen, die mit einem Bezahlterminal ausgestattet sind, ist dies durch unmittelbare Zahlung des Tarifs an der Ladestation möglich. Es existiert aber darüber hinaus eine Vielzahl an Ladestationen, die sich nur aus der Ferne freigeben lassen. Hierzu ist es notwendig, dass sich Nutzer mittels ihrer Mobilgeräte, beispielsweise Smartphones, Tablets, Wearables, Smartwatches, Smart Glasses oder dergleichen gegenüber der Ladestation respektive einem Server identifizieren. Anhand dieser Identifikation kann ein Ladevorgang freigegeben werden.

Dabei wird auf dem Mobilgerät des Nutzers eine Applikation gestartet, mit welcher der Nutzer eine Ladestation auswählen kann, an welcher er den Ladevorgang freigeben möchte. Dies geschieht bisher dadurch, dass der Nutzer in der Applikation entweder eine Ladestationskennung manuell eingibt oder beispielsweise an der Ladestation einen QR-Code einscannt, um die Ladestationskennung zu erfassen. Anhand der Ladestationskennung kann der Nutzer dann die entsprechende Ladestation freigeben. Dies ist zeitaufwendig und fehleranfällig, da bei einer Fehleingabe gegebenenfalls eine Freigabe einer Ladestation erfolgt, an der der jeweilige Nutzer tatsächlich gar nicht laden möchte. Diese Nutzererfahrung sollte möglichst vermieden werden.

Aus diesem Grunde lag dem Gegenstand die Aufgabe zu Grunde, die Zuordnung zwischen Mobilgerät und Ladestation zu optimieren, um in der Folge die Freigabe eines Ladevorgangs möglichst komfortabel gestalten zu können.

Diese Aufgabe wird durch ein Verfahren nach Anspruch 1, ein System nach Anspruch 20, eine Ladestation nach Anspruch 21, ein Mobilgerät nach Anspruch 22 sowie ein Server nach Anspruch 23 gelöst.

Die nachfolgend beschriebenen Verfahrensschritte können jeweils einzeln oder in Kombination in einer Ladestation, einem Mobilgerät oder einem Server oder verteilt darüber durchgeführt werden.

Die nachfolgend genannten Mobilgeräte können beispielsweise Smartphones, Tablets, Wearables, Smartwatches, Smart Glasses oder dergleichen sein. Ladestationen können öffentliche oder halböffentliche sowie private Ladestationen sein, an denen über einen Fernzugriff eine Freigabe einer Ladestation erfolgen kann. Eine Ladestation kann auch als Ladepunkt verstanden werden. An einer Ladestation können ein oder mehrere Ladepunkte angeordnet sein. Ist eine Ladestation mit mehreren Ladepunkten versehen, so kann jeder Ladepunkt als Ladestation im Sinne des Gegenstandes verstanden werden.

Eine Ladeanforderung im Sinne des Gegenstandes kann dadurch bewirkt werden, dass an einer Ladestation ein Ladevorgang stattfinden soll. Hierzu kann die Ladestation entsprechend aufgefordert werden, wie nachfolgend noch beschrieben werden wird.

Ein Ladewunsch kann gegenständlich so verstanden werden, dass eine Applikation auf einem Mobilgerät eines Nutzers indiziert, dass eine Ladefreigabe erfolgen soll. Wie der Ladewunsch erfasst wird, wird nachfolgend noch beschrieben werden.

Bei dem gegenständlichen Verfahren wird erfasst, ob an einer Ladestation eine Ladeanforderung anliegt. Dies kann beispielsweise dann der Fall sein, wenn ein Nutzer ein Ladekabel in die Ladestation einsteckt. Mit Hilfe eines geeigneten Sensors kann dieser Vorgang detektiert werden und als Ladeanforderung interpretiert werden. Auch ist es möglich, dass bei einem fest angeschlagenen Ladekabel detektiert wird, ob der Ladestecker in eine Buchse eines Elektrofahrzeugs eingesteckt wird. Auch hier kann über eine geeignete Sensorik entweder im Stecker der Ladestation oder dem Elektrofahrzeug das Einstecken des Ladekabels in die Buchse des Elektrofahrzeugs sensiert werden. Durch Ausgabe eines entsprechenden Signals kann eine Ladeanforderung signalisiert werden. Darüber hinaus kann beispielsweise bei einem eingesteckten Kabel und einer Verbindung zwischen dem Elektrofahrzeug und der Ladestation das Elektrofahrzeug gegenüber der Ladestation seine Ladebereitschaft signalisieren. Dies ist beispielsweise gemäß DIN IEC 61851-24 oder gemäß ISO IEC 15118 über eine Energieleitung und/oder einen Pilotleiter möglich. Eine solche Ladebereitschaft kann auch als Ladeanforderung im Sinne des Gegenstands verstanden werden.

Ein Ladewunsch kann mit Hilfe eines Mobilgerätes erfasst werden. Ein Nutzer kann auf einem Mobilgerät beispielsweise eine Applikation starten und angeben, dass er einen Ladevorgang beginnen möchte. Auch kann in einem Elektrofahrzeug oder in einem sonstigen Mobilgerät, insbesondere eines der oben genannten, durch Software detektiert werden, dass der Nutzer einen Ladevorgang beginnen möchte. Diese Information kann jeweils als Ladewunsch eines Mobilgerätes interpretiert werden.

Ein Ladewunsch eines Mobilgerätes gibt somit an, dass ein Nutzer einen Ladevorgang starten möchte.

Es ist nun erkannt worden, dass Ladeanforderungen und Ladewunsch zueinander korrelieren, insbesondere hinsichtlich ihrer Position und Zeit. Diese Korrelation kann genutzt werden, um den Ladevorgang einfacher zu gestalten.

Es wird vorgeschlagen, die Ladestation, für die eine Ladeanforderung erfasst wurde zu einem Mobilgerät zuzuordnen, für das ein Ladewunsch erfasst wurde. Hierzu werden gegenständlich eine Positionsinformation der Ladestation und eine Positionsinformation des Mobilgerätes erfasst und für die Zuordnung genutzt.

Jeder Ladestation kann eine Position zugeordnet sein. Diese Position kann statisch in einem Server gespeichert sein oder dynamisch durch ein entsprechendes Positionsbestimmungsmodul in der Ladestation bestimmt werden. Die Position eines Mobilgerätes kann über ein Positionsbestimmungsmodul in dem Mobilgerät oder über ein Positionsbestimmungsmodul in der dem Mobilgerät während der Kommunikation zugeordneten Basisstation durchgeführt werden.

Positionsbestimmungsmodule können beispielsweise GPS-Module, Galileo-Module, GLONASS-Module oder dergleichen sein.

Eine Positionsinformation kann durch die Positionskoordinaten ausgedrückt werden. Eine Positionsinformation ist insbesondere ein Datensatz, der Positionskoordinaten, insbesondere kodiert, enthält.

Die Zuordnung zwischen Ladewunsch und Ladeanforderung erfolgt unter Verwendung der Positionsinformationen. Dabei wird insbesondere die Erkenntnis genutzt, dass eine Ladeanforderung in der Regel am Ort des Ladewunsches und umgekehrt stattfindet. Das heißt, wenn ein Nutzer mit seinem Elektrofahrzeug an eine Ladestation heranfährt und das Elektrofahrzeug mit der Ladestation koppelt oder auch nur das Ladekabel mit der Ladestation koppelt, wird hieraus eine Ladeanforderung für die Ladestation erfasst. Gleichzeitig wird der Nutzer durch sein Mobilgerät einen Ladewunsch äußern, indem er z.B. die Applikation startet, mit der die Ladefreigabe erfolgt. Die Handlungen, die die Ladeanforderungen und den Ladewunsch auslösen, finden in der Regel am gleichen Ort bzw. in einem sehr engen Umkreis um die Ladestation herum statt. Durch Ausnutzen dieser Positionsinformationen ist es möglich, eine Ladestation einem Mobilgerät zuzuordnen, um anschließend auf dem Mobilgerät dem Nutzer nur diejenigen Ladestationen zur Auswahl anzubieten, die tatsächlich für seinen Ladewunsch in Frage kommen. Der Nutzer kann aus den ihm angezeigten Ladestationen einfach eine auswählen und an dieser die Ladefreigabe initiieren. Anders als im Stand der Technik ist die Auswahl der Ladestationen stark beschränkt und wird in der Regel nur eine, zwei oder vier Ladestationen bzw. Ladepunkte beinhalten, jedoch nicht mehr, da in dem räumlich stark eingegrenzten Bereich des Ladewunsches mit hoher Wahrscheinlichkeit nur eine Ladestation mit einem oder zwei Ladepunkten oder zwei Ladestationen mit jeweils zwei Ladepunkten angeordnet sein werden, an denen Ladeanforderungen erkannt wurden.

Der Benutzer kann somit mit einer geringen Fehlerwahrscheinlichkeit denjenigen Ladepunkt bzw. diejenige Ladestation auswählen, an der die Ladefreigabe erfolgen soll.

Gemäß einem Ausführungsbeispiel wird vorgeschlagen, dass das Erfassen der Ladeanforderung das Erkennen eines Ladekabels an einer Ladebuchse der Ladestation, das Erkennen eines Elektrofahrzeugs an einem Ladekabel der Ladestation und/oder das Erkennen einer Ladebereitschaft eines Elektrofahrzeugs an der Ladestation umfasst. Wie zuvor bereits erläutert, können verschiedene Handlungen eines Nutzers an der Ladestation dazu führen, dass eine Ladeanforderung erfasst wird. Dies kann das Stecken des Kabels in die Ladestation, das Stecken eines Ladekabels der Ladestation in ein Elektrofahrzeug oder auch eine Signalisierung einer Ladebereitschaft durch das Elektrofahrzeug gegenüber der Ladestation sein. Andere Handlungen können ebenfalls unter den Begriff des Erfassens der Ladeanforderung fallen.

Gemäß einem Ausführungsbeispiel wird vorgeschlagen, dass die Ladeanforderung in einer Ladestation erfasst wird und/oder dass die Ladeanforderung in einem zentralen Server erfasst wird. Die tatsächliche Handlung des Einsteckens des Ladekabels oder Anschließen des Elektrofahrzeugs erfolgt zwar in der Ladestation, eine entsprechende Signalisierung kann jedoch auch in dem Server erfasst werden. Hierzu kann die Ladestation bzw. ein Sensor der Ladestation ein entsprechendes Signal an einen Server übermitteln, der dieses Signal als Ladeanforderung interpretiert. Somit ist es möglich, dass der Schritt des Erfassens der Ladeanforderung entweder serverseitig oder ladestationsseitig durchgeführt werden kann.

Gemäß einem Ausführungsbeispiel wird vorgeschlagen, dass der Ladeanforderung Meta-Daten zugeordnet werden. Meta-Daten sind Informationen, die semantisch der Ladeanforderung zugeordnet werden können. Dies kann beispielsweise eine Ladestationskennung sein. Innerhalb eines Verbunds von Ladestationen kann jeder Ladestation eine eindeutige Ladestationskennung zugeordnet sein. Diese nummerische oder alphanummerische Kennung kann als Datensatz in den Meta-Daten gespeichert sein. Darüber hinaus kann als Meta-Datum die Positionsinformation der Ladestation gespeichert werden. Dies können beispielsweise die Ortskoordinaten der Ladestation sein. Schließlich ist es möglich einen Zeitstempel der Ladestation zuzuordnen. Ein Zeitstempel kann beispielsweise aus einem Zeitgeber, der eine Zeitnormale repräsentiert, ermittelt werden und als Datum den Meta-Daten zugeordnet werden.

Wie bereits das Erfassen der Ladeanforderung kann auch das Zuordnen der Meta-Daten zu der Ladeanforderung zumindest teilweise in der Ladestation oder in dem zentralen Server erfolgen. So ist es beispielsweise möglich, dass unmittelbar in der Ladestation die Ladeanforderung erfasst wird und zusätzlich dazu die Positionsinformation, die Ladestationskennung und/oder der Zeitstempel dem Signal als Meta-Datum hinzugefügt werden. Andererseits ist es auch möglich, dass nur Teile dieser Meta-Daten in der Ladestation hinzugefügt werden. Auch ist es möglich, dass bei einem Erfassen der Ladeanforderung in einem zentralen Server dort auch die Meta-Daten hinzugefügt werden. Eine Kommunikationsverbindung zwischen einer Ladestation und einem zentralen Server ermöglicht es dem Server, die Ladestation zu identifizieren. Empfängt der Server von der Ladestation die Ladeanforderung und erfasst diese, weiß der Server in der Regel auch, von welcher Ladestation diese Ladeanforderung stammt. Daraufhin kann der Server beispielsweise die Ladestationskennung als Meta-Datum der Ladeanforderung hinzufügen. Darüber hinaus kann in dem Server für jede Ladestation eine Positionsinformation gespeichert sein, die dann dieser Ladeanforderung zugeordnet wird. Schließlich ist es auch möglich, dass in dem Server eine Zeitbasis gepflegt wird, aus welcher der Zeitstempel errechnet wird, der der Ladeanforderung zugeordnet wird.

Mit den Meta-Daten ist nun jeder Ladeanforderung eindeutig eine Ladestation über die Ladestationskennung, eine Position über die Positionsinformation und/oder eine Zeitinformation über den Zeitstempel zugeordnet.

Um nunmehr die Zuordnung der Ladestation bzw. der Ladeanforderung zu dem Mobilgerät bzw. dem Ladewunsch durchzuführen, können ähnliche Schritte wie das Erfassen und Zuordnen von Meta-Daten zu der Ladeanforderung auch für den Ladewunsch erfolgen. Es wird vorgeschlagen, dass das Erfassen des Ladewunsches das Erkennen einer Nutzerinteraktion an dem Mobilgerät und/oder das Starten einer Applikation auf dem Mobilgerät umfasst. Startet der Nutzer eine bestimmte Applikation auf dem Mobilgerät, kann dies als Ladewunsch interpretiert werden. Bei einer bereits gestarteten Applikation kann der Nutzer beispielsweise auf dieser bestimmte Flächen aktivieren, mit denen er signalisieren kann, dass er einen Ladevorgang starten kann. Auch dies kann als Ladewunsch erfasst werden.

Gemäß einem Ausführungsbeispiel wird vorgeschlagen, dass der Ladewunsch in dem Mobilgerät erfasst wird und/oder dass der Ladewunsch in dem zentralen Server erfasst wird.

Wenn die Nutzeraktion an dem Mobilgerät erfolgt oder die Applikation gestartet wird, kann eine entsprechende Signalisierung von dem Mobilgerät an den Server erfolgen und in dem Server kann der Ladewunsch erfasst werden.

Darüber hinaus wird vorgeschlagen, dass dem Ladewunsch Meta-Daten zugeordnet werden. Meta-Daten können solche Daten sein, die semantisch zu dem Ladewunsch passen. Dies kann insbesondere eine Mobilgerätkennung sein. Ein Mobilgerät kann beispielsweise über eine IMEI- oder eine MAC-Adresse eindeutig identifiziert werden. Diese Kennung ermöglicht es, das Mobilgerät eindeutig zu adressieren. Darüber hinaus kann die Positionsinformation des Mobilgerätes zum Zeitpunkt des Erfassens des Ladewunsches als Meta-Datum dem Ladewunsch zugeordnet werden. Schließlich ist es auch möglich, dass ein Zeitstempel dem Ladewunsch als Meta-Datum zugeordnet wird.

Auch wird vorgeschlagen, dass die Zuordnung der Meta-Daten zu dem Ladewunsch zumindest teilweise in dem Mobilgerät oder einem zentralen Server erfolgt. Erfolgt die Zuordnung in dem Mobilgerät, ist es beispielsweise möglich, dass das Mobilgerät seine IMEI- oder MAC-Adresse als Meta-Datum erfasst und dem Ladewunsch zuordnet. Auch kann durch ein Positionsbestimmungsmodul ein Meta-Datum betreffend die Positionsinformationen in dem Mobilgerät erfasst werden und dem Ladewunsch kann dieses Datum zugeordnet werden. Darüber hinaus ist es möglich, dass in dem Mobilgerät ein Zeitstempel erfasst wird und dem Ladewunsch zugeordnet wird.

Wird der Ladewunsch in dem zentralen Server empfangen, ist die Kommunikation in der Regel eindeutig einem bestimmten Mobilgerät zuzuordnen. Über diese Zuordnung kann der zentrale Server eine Gerätekennung dem Ladewunsch zuordnen. Auch ist es möglich, aus Informationen von beispielsweise einer Basisstation Positionsinformationen des Mobilgeräts in dem Server zu empfangen und diese dem Ladewunsch zuzuordnen. Schließlich kann zum Zeitpunkt des Empfangs des Landewunsches ein Zeitstempel in dem Server erstellt werden und dem Ladewunsch zugeordnet werden.

Wird der Ladewunsch in dem Server erfasst und ggf. mit Meta-Daten angereichert, kann dieser Ladewunsch zusammen mit den Meta-Daten an die Ladestation übermittelt werden und in der Ladestation kann eine Zuordnung zwischen Ladestation und Mobilgerät erfolgen. Wird die Ladeanforderung in dem zentralen Server erfasst und mit Meta-Daten angereichert, können diese Informationen an ein Mobilgerät übermittelt werden und in dem Mobilgerät kann eine Zuordnung zwischen Ladestation und Mobilgerät erfolgen. Darüber hinaus ist es möglich, dass Ladeanforderung und Ladewunsch sowohl in dem Server und/oder der Ladestation und/oder dem Mobilgerät erfasst werden und allesamt in dem Server vorliegen. In diesem Fall ist es sinnvoll, wenn der Server die Zuordnung zwischen Ladestation und Mobilgerät durchführt.

Gemäß einem Ausführungsbeispiel wird vorgeschlagen, dass beim Zuordnen der Ladestation zu dem Mobilgerät Meta-Daten des Ladewunsches mit Meta-Daten der Ladeanforderung verglichen werden und abhängig von dem Vergleichsergebnis zumindest eine Ladestation dem Mobilgerät zugeordnet wird. Hierbei ist es möglich, die Meta-Daten von Mobilgerät und Ladewunsch zu korrelieren, insbesondere mittels Kreuzkorrelation. Bei einem Überschreiten eines Grenzwertes durch die Korrelationsfunktion ein positives Vergleichsergebnis auszugeben. Alle Kombinationen von Mobilgerät mit jeweils einer Ladestation, denen ein positives Vergleichsergebnis zugrunde liegt, können identifiziert werden und den entsprechenden Mobilgeräten können alle diesen zugeordneten Ladestationen übermittelt werden, um in den Mobilgeräten eine Freigabe eines Ladevorgangs an einer jeweiligen Ladestation zu ermöglichen.

Gemäß einem Ausführungsbeispiel wird vorgeschlagen, dass beim Vergleichen (Korrelieren) der Meta-Daten zumindest Positionsinformationen der Ladestation mit Positionsinformationen des Mobilgerätes verglichen werden und abhängig von einer hierdurch ermittelten Entfernung zwischen dem Mobilgerät und der Ladestation das Vergleichsergebnis ausgegeben wird. Hierbei wird insbesondere vorgeschlagen, dass eine Differenz zwischen den Positionsinformationen bestimmt wird und diese Differenz als Entfernung zwischen Mobilgerät und Ladestation interpretiert wird. Überschreitet die Entfernung einen Höchstwert, so ist das Vergleichsergebnis negativ, ist die Entfernung kleiner als der Höchstwert, so ist das Vergleichsergebnis positiv. Eine Entfernung kann beispielsweise 15m oder 50m sein, sodass alle Ladestationen, die im Umkreis von 15/50m zu einem Mobilgerät sind, diesem Mobilgerät zugeordnet werden können.

Auch ist es möglich, dass diese Ladestationen zunächst als potenziell dem Mobilgerät zuzuordnenden Ladestationen gekennzeichnet werden und abhängig von weiteren Vergleichsergebnissen eine endgültige Zuordnung erfolgt. Dies gilt für alle hier durchgeführten Vergleiche, die als Filter verstanden werden können und einer oder mehrere Filter können angelegt werden, um eine endgültige Zuordnung zwischen Mobilgerät und Ladestation durchzuführen. Ein Filter kann als Korrelationsfunktion verstanden werden.

Gemäß einem Ausführungsbeispiel wird vorgeschlagen, dass beim Vergleichen (Korrelieren) der Meta-Daten zumindest ein Zeitstempel der Ladeanforderung mit einem Zeitstempel des Ladewunsches verglichen wird und abhängig von einer hierdurch ermittelten Zeitspanne zwischen Ladeanforderung und Ladewunsch das Vergleichsergebnis ausgegeben wird. Ein solcher Filter kann als Zeitfilter verstanden werden. Ist eine Ladeanforderung und ein Ladewunsch in einem Zeitraum von beispielsweise 1 min. erfasst worden, so ist die Wahrscheinlichkeit groß, dass diese einander zugehörig sind. Aus diesem Grunde kann beispielsweise bei einer Zeitspanne von unter 1 min. oder unter 30 Sekunden ein positives Vergleichsergebnis ausgegeben werden ansonsten ein negatives Vergleichsergebnis.

Sind beispielsweise die Vergleichsergebnisse sowohl des Positionsvergleichs als auch des Zeitvergleichs positiv, so können die entsprechenden Ladestationen dem Mobilgerät zugeordnet werden.

Gemäß einem Ausführungsbeispiel wird vorgeschlagen, dass eine Liste von Ladestationen mit ihren Ladestationskennungen und ihrer Position gespeichert wird, von denen eine Ladeanforderung erfasst wurde und dass der jeweiligen Ladeanforderung ein Zeitstempel der Ladeanforderung zugeordnet ist.

Diese Liste wird bevorzugt im Server, kann jedoch auch in einem Mobilgerät oder einer Ladestation gespeichert sein. Dies kann abhängig davon sein, wo die Zuordnung der Ladestation zu dem Mobilgerät erfolgt. Die Liste enthält diejenigen Ladestationskennungen der Ladestationen, von denen eine Ladeanforderung erfasst wurde. Das heißt, es wird stets eine aktuelle Liste derjenigen Ladestationen vorgehalten, die eine aktuelle Ladeanforderung aufweisen. Diese Liste kann fortlaufend aktualisiert werden, beispielsweise wenn Ladeanforderungen länger als 10 Minuten vergangen sind.

Es wird vorgeschlagen, dass der jeweiligen Ladeanforderung in der Liste ein Zeitstempel zugeordnet wird, um festzustellen, zu welcher Zeit die Ladeanforderung erfasst wurde.

Gemäß einem Ausführungsbeispiel wird vorgeschlagen, dass eine Positionsinformation eines Ladewunsches mit den Positionen der Ladestation in der Liste verglichen wird. Die Liste kann insbesondere diejenigen Ladestationskennungen aufweisen, welche zur Ladestation gehören, die eine aktuelle Ladeanforderung haben. Da die Liste, beispielsweise abhängig von dem Zeitstempel fortlaufend aktualisiert werden kann, sind in einer solchen Liste bevorzugt nur diejenigen Ladestationen, die aktuelle Ladeanforderungen haben. Wird nun ein Ladewunsch erfasst, kann in der Liste überprüft werden, welche Ladestation mit einer aktuellen Ladeanforderung im Bereich des Mobilgerätes mit dem Ladewunsch ist. Dies kann durch einen Vergleich der Positionsinformationen erfolgen, in dem die Positionsinformationen des Ladewunsches mit den Positionsinformationen der Ladestationskennung in der Liste verglichen werden. Diejenigen Ladestationen, die in einem bestimmten Umkreis um die Position des Ladewunsches herum angeordnet sind und in der Liste vermerkt sind, können markiert werden.

Darüber hinaus ist es möglich, dass eine zeitliche Korrelation zwischen Ladewunsch und Ladeanforderung berücksichtigt wird. Hierzu wird beispielsweise ein Zeitstempel eines Ladewunsches mit den Zeitstempeln der Ladeanforderungen in der Liste verglichen. Dabei ist es beispielsweise möglich, dass die Liste alle vergangenen Ladeanforderungen mit ihren Zeitstempeln speichert und beispielsweise die Listeneinträge markiert werden, deren Zeitstempel in einem Zeitfenster zu dem Zeitstempel des Ladewunsches liegen, beispielsweise mit einem Vor- und Nachlauf von 15 Sekunden, 30 Sekunden oder 1 Minute. Diejenigen Ladeanforderungen, die in einem Zeitfenster des Zeitstempels des Ladewunsches liegen, können in der Liste markiert werden.

In diesem Zusammenhang sei erwähnt, dass es auch möglich ist, eine Liste mit den Ladewünschen, den Positionsinformationen der Ladewünsche sowie den Zeitstempeln der Ladewünsche und den Mobilgerätekennungen zu speichern und diese Liste mit den aktuell erfassten Ladeanforderungen zu vergleichen. Das Abspeichern und Vergleichen kann entsprechend dem Abspeichern und Vergleichen der Ladeanforderungen, wie zuvor beschrieben, in der Liste erfolgen.

Je nachdem, ob nur der Vergleich der Positionsinformation oder nur der Vergleich der Zeitstempel oder beides erfolgt, wird eine größere oder kleinere Menge an Ladeanforderungen markiert sein. Es wird vorgeschlagen, die markierten Ladestationen in der Liste zu erfassen und dem Mobilgerät zuzuordnen. Dabei werden die Ladestationskennungen der markierten Ladestationen dem Mobilgerät bereitgestellt.

In einer ersten Schleife kann beispielsweise ein Vergleich der Zeitstempel erfolgen und in einer zweiten Schleife kann dann beispielsweise ein Vergleich der Positionsinformationen erfolgen, wobei dann lediglich ein Vergleich der in der ersten Schleife bereits markierten Listeneinträge erfolgen muss. Dabei kann auch die Reihenfolge dieser Schleifen umgekehrt sein. Nach Durchlaufen der beiden Vergleiche bleibt eine Anzahl an Ladestationen und Ladestationskennungen in der Liste übrig, deren Ladeanforderungen sowohl hinsichtlich der Position als auch hinsichtlich des Zeitstempels mit einem Ladewunsch korrelieren. Diese Ladestation bzw. deren Ladestationskennungen können ausgewählt und dem Mobilgerät bereitgestellt werden.

Auch ist es möglich, von einem Server oder einer Ladestation die Ladestationskennungen an das Mobilgerät zu übertragen. Die Übertragung erfolgt insbesondere drahtlos über ein Weitverkehrsnetz, insbesondere über ein zellulares Weiterverkehrsnetz. Die Applikation in dem Mobilgerät kann die Ladestationskennungen auswerten und die Ladestation mit den entsprechenden Ladestationskennungen auf einem Display auswählbar anzeigen.

Gemäß einem Ausführungsbeispiel wird vorgeschlagen, dass nach einer Auswahl einer Ladestation in dem Mobilgerät eine Ladefreigabe an den zentralen Server und/oder die Ladestation übermittelt wird. Hierbei wird die Kennung von dem Mobilgerät über das Weitverkehrsnetz an den Server und/oder die Ladestation übermittelt. Insbesondere ist es möglich, dass dabei eine Nutzerkennung zusammen mit der Ladestationskennung an einen Server übermittelt wird und in dem Server überprüft wird, ob mit dieser Nutzerkennung eine Ladefreigabe möglich ist. In einem positiven Fall kann dann der Server die Ladestation freigeben und der Ladestrom kann fließen.

Nachfolgend wird der Gegenstand anhand einer Ausführungsbeispiele zeigenden Zeichnung näher erläutert. In der Zeichnung zeigen:
- Fig. 1: ein System zur Durchführung eines gegenständlichen Verfahrens;
- Fig. 2: die Zuordnung von Ladewünschen zu Ladeanforderungen;
- Fig. 3: ein Mobilgerät gemäß einem Ausführungsbeispiel;
- Fig. 4: ein Ablaufdiagramm eines gegenständlichen Verfahrens.

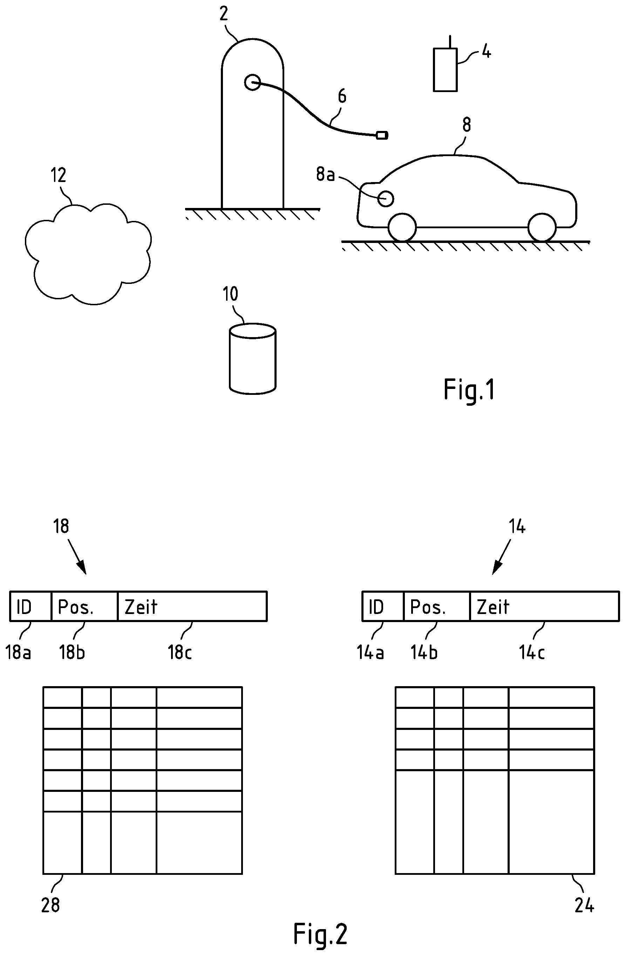

Fig. 1 zeigt eine Ladestation 2, ein Mobilgerät 4, ein an der Ladestation 2 fest angeschlagenes oder mit der Ladestation 2 verbindbares Ladekabel 6, ein Elektrofahrzeug 8, einen zentralen Server 10 sowie ein Weitverkehrsnetz 12, beispielsweise ein zellulares Mobilfunknetz, das Internet oder eine Kombination hieraus oder jegliches anderes Weitverkehrsnetz 12. Ein Nutzer eines Elektrofahrzeugs 8 möchte dieses an der Ladestation 2 aufladen. Hierfür verbindet er das Elektrofahrzeug 8 über die Ladebuchse 8a mit dem Ladekabel 6, welches an die Ladestation 2 gekoppelt ist oder wird.

An Ladestationen 2, die über keine eigene Bezahleinheit verfügen, wird der Ladevorgang häufig über ein Mobilgerät 4 freigegeben. In dem Mobilgerät 4 ist eine Applikation installiert, mit dem sich der Nutzer gegenüber der Ladestation 2 bzw. dem dahinter angeordneten Server 10 authentifizieren kann, um einen Ladevorgang zu starten. Hierfür werden Nutzerdaten und/oder Zahlungsdaten von dem Mobilgerät 4 über das Weitverkehrsnetz 12 an den Server 10 übermittelt. In dem Server 10 wird die Nutzerberechtigung geprüft und bei einer positiven Prüfung sendet der Server 10 über das Weitverkehrsnetz 12 eine Ladefreigabe an die Ladestation 2. In der Ladestation 2 erfolgt eine Freigabe des Ladevorgangs, so dass elektrische Energie von der Ladestation 2 über das Ladekabel 6 in die Batterie des Elektrofahrzeugs 8 eingespeist wird.

In dem Moment, in dem das Ladekabel 6 in die Ladestation 2 eingesteckt wird, kann ein Prozessor (nicht gezeigt) in der Ladestation 2 eine Ladeanforderung detektieren. Das heißt, die Ladestation 2 detektiert, dass ein Nutzer eines Elektrofahrzeugs 8 einen Ladevorgang starten möchte. Bei einem fest angeschlagenen Ladekabel 6 kann der Prozessor in der Ladestation 2 eine Ladeanforderung beispielsweise dann detektieren, wenn das Ladekabel 6 in die Buchse 8a des Elektrofahrzeugs 8 eingesteckt wird. Dabei kann beispielsweise ein innerer Widerstand des Kabels 6 oder zweier Adern den Kabels 6 zueinander gemessen werden, der sich beim Verbinden mit dem Elektrofahrzeug 8 verändern kann. Auch ist es möglich, dass nach dem Verbinden des Elektrofahrzeugs 8 mit der Ladestation 2 über das Ladekabel 6 das Elektrofahrzeug 8 eine Ladebereitschaft gegenüber der Ladestation 2 bzw. dessen Prozessor signalisiert. Auch eine solche Ladebereitschaft kann als Ladeanforderung verstanden werden.

Auch hinaus kann der Nutzer mit seinem Mobilgerät 4 beispielsweise eine Applikation des Ladedienstleisters starten. Das Starten dieser Applikation kann als Ladewunsch gewertet werden. Auch kann ein Ladewunsch das Aktivieren bestimmter Funktionen innerhalb der Applikation sein.

Wünscht der Nutzer, die Ladestation 2 zu aktivieren, muss er mit seinem Mobilgerät 4 angeben, dass er an eben dieser Ladestation 2 und keiner anderen Ladestation 2 laden möchte. Hierzu muss er die Ladestation 2, an welcher er laden möchte, gegenüber dem Server 10 identifizieren. Eine Vielzahl an Ladestationen 2 macht es notwendig, dass die Identifikation der Ladestation 2 eine mehrstellige, insbesondere alphanummerische Zeichenfolge ist. Diese muss der Benutzer an seinem Mobilgerät 2 umständlich eingeben oder beispielsweise über einen Barcode an der Ladestation abscannen. Diese Prozedur ist aufwendig und fehleranfällig, so dass gegenständlich eine automatisierte Zuordnung von Ladewunsch zu Ladeanforderung, insbesondere durch Verwendung von Positionsinformationen und/oder Zeitinformationen erfolgt. Die entsprechende Zuordnung kann beispielsweise in einem Server 10, der Ladestation 2 oder dem Mobilgerät 4 erfolgen. Die jeweiligen Schritte können auch in verschiedenen Entitäten gebildet aus Ladestation 2, Mobilgerät 4 und Server 10 erfolgen.

Eine verteilte Verarbeitung ist dabei möglich, nachfolgend wird der Übersichtlichkeit halber lediglich die Verarbeitung in einem Server 10 beschrieben, liegen die entsprechenden Daten jedoch in der Ladestation 2 und/oder dem Mobilgerät 4 vor, können die entsprechenden Verfahrensschritte auch in diesen Geräten durchgeführt werden.

Fig. 2 zeigt Datenstrukturen 14,18 eines Ladewunsches (14) sowie einer Ladeanforderung (18). Die Datenstruktur 14 des Ladewunsches kann beispielsweise eine Mobilgerätekennung 14a, eine Positionsinformation 14b des Mobilgerätes 4 sowie einen Zeitstempel 14c enthalten. Die Datenstruktur 14 des Ladewunsches kann in dem Mobilgerät 4 erstellt werden, wenn der Nutzer eine Applikation startet.

Die Datenstruktur 18 der Ladeanforderung kann beispielsweise eine Ladestationskennung 18a der Ladestation 2, eine Positionsinformation 18b der Ladestation 2 sowie eine Zeitinformation 18c enthalten.

Startet ein Benutzer an einem Mobilgerät 4 eine Ladeapplikation oder aktiviert bestimmte Schaltflächen darauf, kann die Datenstruktur 14 des Ladewunsches erstellt werden. Hierbei ist es zumindest notwendig, einen Ladewunsch als solchen zu kennzeichnen und die Gerätekennung 14a bereit zu stellen. Darüber hinaus wird durch das Mobilgerät 4 oder durch das das Mobilgerät 4 betreibende Funknetz eine Positionsinformation 14b bereitgestellt. Diese beiden Daten Gerätekennung 14a und Positionsinformation 14b werden in einem Datensatz 14 über das Weitverkehrsnetz 12 an den Server 10 übermittelt. In dem Server 10 kann beim Empfang der Datenstruktur 14 die Zeitinformation 14c der Datenstruktur 14 hinzugefügt werden. Auch ist es möglich, dass die Zeitinformation 14c in dem Mobilgerät 4 bereits der Datenstruktur 14 hinzugefügt wird.

Ähnliches gilt für die Datenstruktur 18 der Ladeanforderung. Detektiert eine Ladestation 2 einen Ladewunsch, so wird zumindest der Ladewunsch als solcher zusammen mit der eindeutigen Kennung 18a der Ladestation 2 in der Datenstruktur 18 bereitgestellt und über das Weitverkehrsnetz 12 an den Server 10 übermittelt. Die Positionsinformation 18b kann durch die Ladestation 2 der Datenstruktur 18 hinzugefügt werden, wenn die Ladestation 2 ihre Position kennt, die statisch gespeichert sein kann oder über ein (nicht gezeigtes) Ortsbestimmungsmodul dort bestimmt werden kann. Dasselbe gilt für die Zeitinformation 18c, welche durch die Ladestation 2 bereitgestellt werden kann oder durch den Server 10 beim Empfangen der Datenstruktur 18.

In dem Server 10 sind Listen 24, 28 mit Ladewünschen (24) und Ladeanforderungen (28) gespeichert. Sobald eine Datenstruktur 14 eingeht, wird diese Datenstruktur 14 als neue Zeile in der Liste 24 gespeichert. Sobald eine Datenstruktur 18 eingeht, wird diese in der Liste 28 als neue Zeile gespeichert.

Die Listen 24, 28 können laufend, regelmäßig oder unregelmäßig aktualisiert werden, in dem beispielsweise diejenigen Zeilen gelöscht werden, in denen Datenstrukturen 14, 18 mit einer Zeitinformation 14c, 18c gespeichert sind, deren Zeit eine bestimmte Wartezeit abgelaufen ist, beispielsweise eine halbe Minute, 1 Minute, 5 Minuten, 10 Minuten.

Durch Einstellung der Wartezeit ist es möglich, eine zeitliche Korrelation zwischen Ladewunsch und Ladeanforderung zu erreichen, so dass nur diejenigen Ladewünsche zu Ladeanforderungen und umgekehrt zugeordnet werden, die in einem gewissen Zeitfenster erstellt wurden.

Die Reihenfolge des Eingangs der Datenstruktur 14 des Ladewunsches und der Datenstruktur 18 der Ladeanforderung in dem Server 10 variabel ist, ist ein gegenseitiger Vergleich der Datenstrukturen 14, 18 mit Einträgen in den Listen 24, 28 notwendig, wie nachfolgend beschrieben.

Langt eine Datenstruktur 14 in den Server 10 ein, so wird diese nicht nur in der Liste 24 abgelegt, sondern es erfolgt auch eine Korrelation mit den Einträgen in der Liste 28. Hierbei ist es beispielsweise möglich, dass zunächst die Positionsinformationen 14b mit allen Positionsinformationen 18b der Listeneinträge der Liste 28 verglichen werden. Ist die Abweichung in der Position geringer als ein Grenzwert, der beispielsweise einen Umkreis von 5m, 10m, 50m definieren kann, so werden die entsprechenden Listeneinträge in der Liste 28 markiert. Anschließend werden die markierten Listeneinträge hinsichtlich ihrer Zeitinformation 18c mit der Zeitinformation 14c verglichen und nur diejenigen Einträge herausgefiltert, bei denen die Zeitinformation 14c, 18c so korrelieren, dass sie innerhalb eines Zeitfensters, von beispielsweise 1 Minute, 5 Minuten, 10 Minuten liegen. Die so identifizierten Listeneinträge stellen die Ladeanforderungen 18 der Ladestation 2 dar, die zu einem ähnlichen Zeitpunkt in einem ähnlichen räumlichen Bereich erstellt wurden, wie der Ladewunsch der empfangen Datenstruktur 14. Die entsprechenden Ladestationskennungen 18a werden von dem Server 10 über das Weitverkehrsnetz 12 an das Mobilgerät 4, von welchem die Datenstruktur 14 empfangen wurde übermittelt und dort zur Auswahl gestellt.

Auch ist es möglich, dass eine Datenstruktur 18 in den Server 10 einlangt. Die Datenstruktur 18 wird als Listeneintrag in der Liste 28 abgelegt und es erfolgt auch eine Korrelation mit den Einträgen in der Liste 24. Hierbei ist es beispielsweise möglich, dass zunächst die Positionsinformationen 18b mit allen Positionsinformationen 14b der Listeneinträge der Liste 24 verglichen werden. Ist die Abweichung in der Position geringer als ein Grenzwert, der beispielsweise einen Umkreis von 5m, 10m, 50m definieren kann, so werden die entsprechenden Listeneinträge in der Liste 24 markiert. Anschließend werden die markierten Listeneinträge hinsichtlich ihrer Zeitinformation 14c mit der Zeitinformation 18c verglichen und nur diejenigen Einträge herausgefiltert, bei denen die Zeitinformation 18c, 14c so korrelieren, dass sie innerhalb eines Zeitfensters, von beispielsweise 1 Minute, 5 Minuten, 10 Minuten liegen. Die so identifizierten Listeneinträge stellen die Ladewünsche von Mobilgeräte 4 dar, die zu einem ähnlichen Zeitpunkt in einem ähnlichen räumlichen Bereich erstellt wurden, wie die Ladeanforderung der empfangen Datenstruktur 18. Die entsprechende Ladestationskennung 18a wird von dem Server 10 über das Weitverkehrsnetz 12 an das oder die Mobilgerät 4, von denen die Datenstruktur 14 empfangen wurden übermittelt und dort zur Auswahl gestellt.

Die Abfolge der Vergleiche kann verschieden sein, also anders als oben beschrieben zunächst der Vergleich der Zeitinformationen 14c, 18c und anschließend der Vergleich der Positionsinformation 14b, 18b.

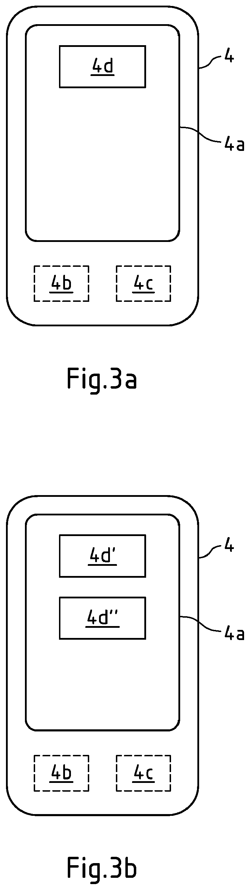

Ein Mobilgerät 4 kann ein Display 4a sowie eine Kommunikationseinrichtung 4b und einen Prozessor 4c, wie in der Figur 3a gezeigt, aufweisen. In dem Prozessor 4c wird eine Applikation gestartet, die auf dem Display 4a beispielsweise eine Bedienfläche 4d anzeigt. Ein Nutzer der diese Bedienfläche 4d aktiviert, kann beispielsweise dadurch einen Ladewunsch auslösen. Die Datenstruktur 14 des Ladewunsches wird in dem Prozessor 4c erzeugt. Diese Datenstruktur 14 wird über die Kommunikationseinrichtung 4b an den Server 10, wie beschrieben, übermittelt. In dem Server 10 erfolgt der Abgleich zwischen Ladewunsch und Ladeanforderung wie beschrieben. Diejenigen Ladestationskennungen 18a, die identifiziert wurden, werden an das Mobilgerät 4, wie beschrieben, übermittelt.

Das Mobilgerät 4 empfängt die Ladestationskennungen und zeigt diese auf dem Display 4a anhand der Bedienelemente 4d', 4d" wie in der Fig. 3b gezeigt an. Der Nutzer kann eine der Bedienflächen 4d', 4d" aktivieren, woraufhin ein Freigabeprozess zum Freigeben des Ladevorgangs an der betreffenden Ladestation 2 ausgelöst wird.

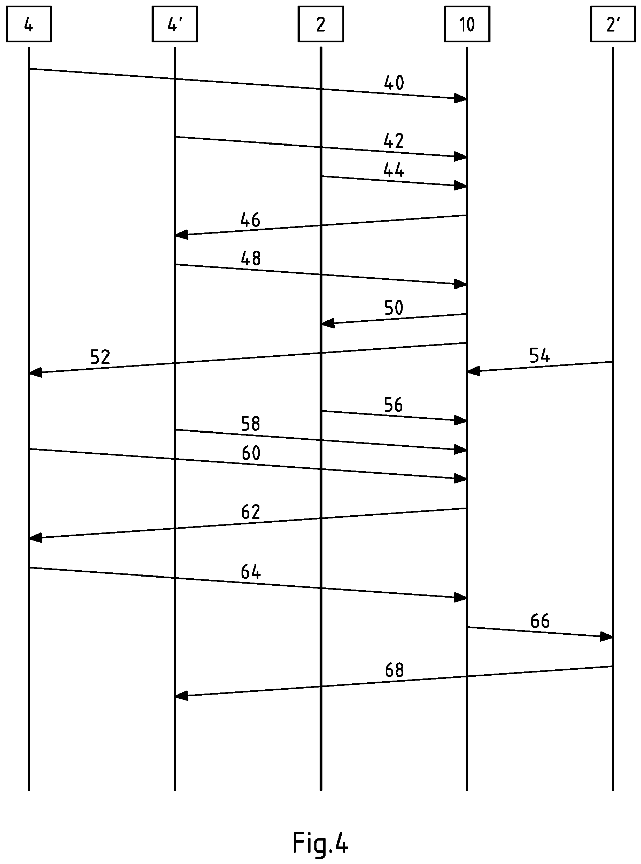

Ein Ablaufdiagramm eines gegenständlichen Verfahrens ist in der Fig. 4 gezeigt.

Hierin sind zwei Ladestationen 2, 2', zwei Mobilgeräte 4, 4' und ein Server 10 sowie die Nachrichten untereinander dargestellt. In dem Mobilgerät 4 kann eine Datenstruktur 14 erstellt werden. Diese wird mithilfe der Nachricht 40 an den Server 10 übermittelt. In dem Mobilgerät 4' kann kurze Zeit später ebenfalls eine Datenstruktur 14 erzeugt werden, welche mit der Nachricht 42 an den Server 10 übermittelt wird.

Diese beiden übermittelten Datenstrukturen 14 werden mit den Listeneinträgen in der Liste 28 abgeglichen. Im gezeigten Beispiel findet sich keine Ladeanforderung, die zu den entsprechenden Ladewünschen passt. Es wird kein Mobilgerät über eine passende Ladeanforderung informiert.

Nach einer kurzen Zeit wird ein Ladewunsch in einer Ladestation 2 detektiert und eine zugehörige Datenstruktur 18 mit der Nachricht 44 an den Server 10 übermittelt. Die Datenstruktur 18 und deren Einträge werden mit den Einträgen in der Liste 24 verglichen. Dabei wird festgestellt, dass sowohl Zeitinformationen 14c, 18c als auch Positionsinformationen 14b, 18b zwischen der Ladeanforderung der Ladestation 2 und dem Ladewunsch des Mobilgerätes 4' korrelieren. Daraufhin wird die Identifikation der Ladestation 2 in der Nachricht 46 an die Mobilstation 4' übermittelt.

In der Mobilstation 4' wird auf dem Display 4a die Kennung der Ladestation 2 angezeigt und der Nutzer kann diese auswählen. Tut er dies, wird ein Wunsch zur Ladefreigabe in der Nachricht 48 an den Server 10 übermittelt. In dem Server 10 erfolgt die Überprüfung der Ladefreigabe und bei einer positiven Prüfung wird mit der Nachricht 50 der Ladevorgang an der Ladestation 2 gestartet.

Mit Ablauf einer bestimmten Zeit, in dem keine Ladeanforderung, die mit dem mit der Nachricht 40 übermittelten Ladewunsch übereinstimmt, in dem Server 10 eingegangen ist, wird der Ladewunsch aus der Liste 24 gelöscht und das Mobilgerät 4 wird mit der Nachricht 52 darüber informiert. Hieraufhin kann das Display 4a in dem Mobilgerät 4 gemäß Fig. 3b zurück springen in eine Anzeige gemäß Fig. 3a, sodass ein Nutzer erneut einen Ladewunsch auslösen kann.

Auch ist es möglich, dass mit der Nachricht 54 eine Ladeanforderung von der Ladestation 2' und mit der Nachricht 56 eine Ladeanforderung von der Ladestation 2 jeweils in einer Datenstruktur 18 in dem Server 10 empfangen werden. Beide Datenstrukturen 18 werden mit den Einträgen in der Liste 24 verglichen und im gezeigten Beispiel gibt es keine Übereinstimmung. Es erfolgt keine Signalisierung einer Ladestationskennung an ein Mobilgerät 4, 4'

Mit der Nachricht 58 kann vom Mobilgerät 4' ein Ladewunsch mit einer Datenstruktur 14 in dem Server 10 empfangen werden. Dieser Ladewunsch wird mit den Einträgen in der Liste 28, beispielsweise umfassend auch die Datenstrukturen 18 der mit den Nachrichten 54, 56 übermittelten Ladeanforderungen, verglichen. Im gezeigten Beispiel ist keine Korrelation vorhanden, was sowohl zeitliche Gründe haben kann, als auch an der Position liegen kann. Daher erhält das Mobilgerät 4' keine Rückmeldung.

Nach einer weiteren Zeit kann mit der Nachricht 60 eine Datenstruktur 14 des Mobilgeräts 4 in dem Server 10 empfangen werden. Dieser Ladewunsch wird mit den Einträgen in der Liste 28, beispielsweise umfassend auch die Datenstrukturen 18 der mit den Nachrichten 54, 56 übermittelten Ladeanforderungen, verglichen. Im gezeigten Beispiel wird eine Korrelation der Zeitinformationen und/oder Positionsinformationen mit denen der Datenstruktur 18 der Ladeanforderung, die mit der Nachricht 54 empfangen wurde, festgestellt. Aus dieser Ladeanforderung wird die Kennung 18a der Ladestation 2' extrahiert und mit der Nachricht 62 an das Mobilgerät 4 übermittelt. Das Mobilgerät 4 kann auf dem Display 4a eine entsprechende Auswahl anzeigen. Wählt der Nutzer aus dieser Auswahl die Ladestation 2' aus, wird mit einer Nachricht 64 der Server darüber informiert und der Freigabeprozess kann beginnen. Dabei wird eine Ladefreigabenachricht 66 an die Ladestation 2' übermittelt und der Ladevorgang kann beginnen.

Zu dem Ladewunsch des Mobilgerätes 4', der mit der Nachricht 58 übermittelt wurde, kann keine entsprechende Ladeanforderung vorliegen. Ist dies der Fall, so wird mit der Nachricht 68 das Mobilgerät 4' darüber informiert und der Nutzer kann erneut zur Aktivierung eines Ladewunsches aufgefordert werden.

Mit Hilfe des gegenständlichen Verfahrens ist es möglich, den Ladevorgang einfacher zu beginnen, in dem eine Korrelation hinsichtlich Zeit und/oder Position eines Mobilgeräts und einer Ladestation bzw. der darin ausgelösten Ladewünsche und Ladeanforderungen durchgeführt wird.

## Patentansprüche

1. Verfahren zum Zuordnen einer Ladestation zu einem Mobilgerät umfassend,
- Erfassen einer Ladeanforderung für eine Ladestation,
- Erfassen eines Ladewunsches eines Mobilgerätes,
- Zuordnen der Ladestation, für die die Ladeanforderung erfasst wurde, zu dem Mobilgerätes für das der Ladewunsch erfasst unter Verwendung zumindest einer Positionsinformation der Ladestation und einer Positionsinformation des Mobilgerätes.

2. Verfahren nach Anspruch 1,
**dadurch gekennzeichnet,**
- **dass** das Erfassen der Ladeanforderung das Erkennen eines Ladekabels an einer Ladebuchse der Ladestation, das Erkennen eines Elektrofahrzeugs an einem Ladekabel der Ladestation und/oder das Erkennen einer Ladebereitschaft eines Elektrofahrzeugs an der Ladestation umfasst.

3. Verfahren nach Anspruch 1 oder 2,
**dadurch gekennzeichnet,**
- **dass** die Ladeanforderung in einer Ladestation erfasst wird und/oder dass die Ladeanforderung in einem zentralen Server erfasst wird.

4. Verfahren nach einem der vorangehenden Ansprüche,
**dadurch gekennzeichnet,**
- **dass** der Ladeanforderung Metadaten zugeordnet werden, insbesondere dass einer Ladeanforderung eine Ladestationskennung, die Positionsinformation der Ladestation und/oder ein Zeitstempel zugeordnet wird, insbesondere
- **dass** die Zuordnung der Metadaten zu der Ladeanforderung zumindest teilweise in der Ladestation und/oder einem zentralen Server erfolgt.

5. Verfahren nach einem der vorangehenden Ansprüche,
**dadurch gekennzeichnet,**
- **dass** das Erfassen des Ladewunsches das Erkennen einer Nutzerinteraktion an dem Mobilgerät und/oder das Starten einer Applikation auf dem Mobilgerät umfasst, insbesondere
- **dass** der Ladewunsch in dem Mobilgerät erfasst wird und/oder dass der Ladewunsch in einem zentralen Server erfasst wird.

6. Verfahren nach einem der vorangehenden Ansprüche,
**dadurch gekennzeichnet,**
- **dass** dem Ladewunsch Metadaten zugeordnet werden, insbesondere dass einem Ladewunsch eine Mobilgerätekennung, die Positionsinformation des Mobilgerätes und/oder ein Zeitstempel zugeordnet wird, insbesondere
- **dass** die Zuordnung der Metadaten zu dem Ladewunsch zumindest teilweise in dem Mobilgerät und/oder einem zentralen Server erfolgt.

7. Verfahren nach einem der vorangehenden Ansprüche,
**dadurch gekennzeichnet,**
- **dass** das Zuordnen der Ladestation zu dem Mobilgerätes in der Ladestation, dem Mobilgerät oder einem zentralen Server durchgeführt wird, und/oder
- **dass** beim Zuordnen der Ladestation zu dem Mobilgerät Metadaten des Ladewunsches mit Metadaten der Ladeanforderung verglichen werden und abhängig von dem Vergleichsergebnis zumindest eine Ladestation dem Mobilgerät zugeordnet wird.

8. Verfahren nach einem der vorangehenden Ansprüche,
**dadurch gekennzeichnet,**
- **dass** beim Vergleichen der Metadaten zumindest Positionsinformationen der Ladestation mit Positionsinformationen des Mobilgerätes verglichen werden und abhängig von einer hierdurch ermittelten Entfernung zwischen dem Mobilgerät und der Ladestation das Vergleichsergebnis ausgegeben wird, und/oder
- **dass** beim Vergleichen der Metadaten zumindest ein Zeitstempel der Ladeanforderung mit einem Zeitstempel des Ladewunsches verglichen wird und abhängig von einer hierdurch ermittelten Zeitspanne zwischen Ladeanforderung und Ladewunsch das Vergleichsergebnis ausgegeben wird.

9. Verfahren nach einem der vorangehenden Ansprüche,
**dadurch gekennzeichnet,**
- **dass** eine Liste von Ladestationen mit ihren Ladestationskennungen und ihrer Position gespeichert wird, von denen eine Ladeanforderung erfasst wurde und dass der jeweiligen Ladeanforderung ein Zeitstempel der Ladeanforderung zugeordnet ist.

10. Verfahren nach einem der vorangehenden Ansprüche,
**dadurch gekennzeichnet,**
- **dass** eine Positionsinformation eines Ladewunsches mit den Positionen der Ladestationen in der Liste verglichen wird und abhängig von einer hierdurch ermittelten Entfernung die jeweilige Ladestation in der Liste markiert wird, und/oder
- **dass** ein Zeitstempel eines Ladewunsches mit den Zeitstempeln der Ladeanforderungen in der Liste verglichen wird und abhängig von einer hierdurch ermittelten Zeitspanne die jeweilige Ladestation in der Liste markiert wird.

11. Verfahren nach einem der vorangehenden Ansprüche,
**dadurch gekennzeichnet,**
- **dass** beim Zuordnen der Ladestation zu dem Mobilgerät die markierten Ladestationen in der Liste erfasst werden und deren Ladestationskennungen dem Mobilgerät bereitgestellt werden und/oder
- **dass** abhängig von der Zuordnung der Ladestation zu dem Mobilgerät in einer Applikation des Mobilgerätes zumindest eine Ladestation auswählbar angezeigt wird.

12. System zur Durchführung eines Verfahrens nach einem der vorangehenden Ansprüche mit
- einer Ladestation eingerichtet zum Erfassen einer Ladeanforderung,
- einem Mobilgerät eingerichtet zum Erfassen eines Ladewunsches und
- einer Einrichtung zum Zuordnen der Ladestation, für die die Ladeanforderung erfasst wurde, zu dem Mobilgerätes für das der Ladewunsch erfasst unter Verwendung zumindest einer Positionsinformation der Ladestation und einer Positionsinformation des Mobilgerätes.

13. Ladestation zur Durchführung eines Verfahrens nach einem der vorangehenden Ansprüche mit
- einer Erfassungseinrichtung zum Erfassen einer Ladeanforderung,
- einer Empfangseinrichtung eingerichtet zum Empfangen eines Ladewunsches eines Mobilgerätes und
- einer Einrichtung zum Zuordnen der Ladestation, für die die Ladeanforderung erfasst wurde, zu dem Mobilgerätes für das der Ladewunsch erfasst unter Verwendung zumindest einer Positionsinformation der Ladestation und einer Positionsinformation des Mobilgerätes.

14. Mobilgerät zur Durchführung eines Verfahrens nach einem der vorangehenden Ansprüche mit
- eine Erfassungseinrichtung zum Erfassen eines Ladewunsches,
- einer Empfangseinrichtung eingerichtet zum Empfangen einer Ladeanforderung einer Ladestation und
- einer Einrichtung zum Zuordnen der Ladestation, für die die Ladeanforderung erfasst wurde, zu dem Mobilgerätes für das der Ladewunsch erfasst unter Verwendung zumindest einer Positionsinformation der Ladestation und einer Positionsinformation des Mobilgerätes.

15. Server zur Durchführung eines Verfahrens nach einem der vorangehenden Ansprüche mit
- einer Empfangseinrichtung eingerichtet zum Empfangen einer Ladeanforderung einer Ladestation,
- einer Empfangseinrichtung eingerichtet zum Empfangen eines Ladewunsches eines Mobilgerätes und
- einer Einrichtung zum Zuordnen der Ladestation, für die die Ladeanforderung erfasst wurde, zu dem Mobilgerätes für das der Ladewunsch erfasst unter Verwendung zumindest einer Positionsinformation der Ladestation und einer Positionsinformation des Mobilgerätes.
